# EUROPÄISCHE PATENTANMELDUNG

(11) **EP 2 270 947 A2**
(43) Veröffentlichungstag der Anmeldung: **05.01.2011**
(21) Anmeldenummer: 10166847.3
(22) Anmeldetag: 22.06.2010
(51) Int. Cl.: H02J 3/06

(54) **Vorrichtung zur Energieverteilung und Verfahren**

(30) Priorität: 02.07.2009 DE 102009031550
(71) Anmelder: SIEMENS AKTIENGESELLSCHAFT, 80333 München (DE)
(72) Erfinder: Bahlinger, Walter, 76863 Herxheim (DE)

(57) **Zusammenfassung**

Die Erfindung betrifft eine Vorrichtung (20) zur Energieverteilung, umfassend
- eine Energieverteilungsseinrichtung (4), welche
• einen ersten Anschluss (1a) zum Anschluss an ein erstes Stromnetz (1),
• einen zweiten Anschluss (2a) zum Anschluss an ein zweites Stromnetz (2) und
• einen dritten Anschluss (3a) zum Anschluss an ein drittes Stromnetz (3) aufweist,

- eine Steuereinheit (5), welche mit der Energieverteilungsseinrichtung (4) zum Steuern der Energieverteilung in Verbindung steht,

wobei die Energieverteilungsseinrichtung (4) dazu ausgebildet ist anhand eines Steuersignals (5a) von der Steuereinheit (5) einen ersten Energiefluss (11) aus dem ersten Stromnetz (1) in einen ersten Anteil (11a) und einen zweiten Anteil (11b) aufzuteilen und den ersten Anteil (11a) in das zweite Stromnetz (2) und den zweiten Anteil (11b) in das dritte Stromnetz (3) umzuleiten.

## Beschreibung

Die Erfindung betrifft eine Vorrichtung zur Energieverteilung nach den Merkmalen des Anspruchs 1.

Weiterhin betrifft die Erfindung ein Verfahren zum Betrieb einer Energieverteilungseinrichtung.

Eine Energieerzeugung mit alternativen Energiequellen wie z.B. der Windkraft oder der Sonnenkraft sind bekannt. Es wird beispielsweise mittels Photovoltaikanlagen Strom erzeugt. Nach der EP 1 914 857 A1 ist eine Schaltungseinrichtung und ein Verfahren für Photovoltaikgeneratoren bekannt und es wird ein Wechselrichter, insbesondere für den Einsatz in einer Photovoltaikanlage mit einem Gleichspannungseingang und einem Wechselspannungsausgang vorgestellt.

Nach dem Stand der Technik ist es zwar bekannt einen durch eine Photovoltaikanlage erzeugten Gleichstromes in einen Wechselstrom zum Verbrauch umzurichten, aber im Hinblick auf eine energieeffiziente Nutzung der mittels alternativer Energiequellen erzeugten Wechselspannungen wird in EP 1 914 857 A1 nichts offenbart.

Es ist daher die Aufgabe der Erfindung, eine Vorrichtung und ein Verfahren bereitzustellen, welches es ermöglicht, die mit alternativen Energiequellen erzeugte Energie wirtschaftlich besser zu nutzen.

Diese Aufgabe wird gelöst durch eine Vorrichtung zur Energieverteilung, umfassend eine Energieverteilungseinrichtung, welche einen ersten Anschluss zum Anschluss an ein erstes Stromnetz, einen zweiten Anschluss zum Anschluss an ein zweites Stromnetz und einen dritten Anschluss zum Anschluss an ein drittes Stromnetz aufweist, eine Steuereinheit, welche mit der Energieverteilungseinrichtung zum Steuern der Energieverteilung in Verbindung steht, wobei die Energieverteilungseinrichtung dazu ausgebildet ist anhand eines Steuersignals von der Steuereinheit einen ersten Energiefluss aus dem ersten Stromnetz in einen ersten Anteil und einen zweiten Anteil aufzuteilen und den ersten Anteil in das zweite Stromnetz und den zweiten Anteil in das dritte Stromnetz umzuleiten. Beispielsweise ist an dem ersten Anschluss über das erste Stromnetz eine alternative Energiequelle angeschlossen, welche einen ersten Energiefluss in Richtung der Vorrichtung bzw. der Energieverteilungseinrichtung bereitstellt. An den zweiten Anschluss ist ein Verbrauchsnetzwerk angeschlossen, wie es beispielsweise durch ein Gebäudestromnetzwerk repräsentiert wird. In diesem Netzwerk, beispielsweise einem Privathaushalt, wird über eine Mehrzahl von Verbrauchern Energie verbraucht. Um eine Grundversorgung für dieses Gebäudestromnetz bereitzustellen ist über den dritten Anschluss ein drittes Stromnetz angeschlossen, welches permanent Energie bereitstellt. Da es nach dem Stand der Technik nur vorgesehen ist über alternative Energiequellen erzeugte Energie, insbesondere in Privathaushalten, in ein öffentliches Stromnetzwerk zurückzuspeisen, wird dank der Erfindung die Möglichkeit geschaffen die mittels alternativer Energiequellen erzeugte Energie auch in das zweite Stromnetz über einen ersten Anteil des ersten Energieflusses zurückzuspeisen. Diese durch den ersten Anteil bereitgestellte zusätzliche Energie kann mit Vorteil in dem zweiten Stromnetz, vorzugsweise in einem Privathaushalt, für Verbrauchsgeräte genutzt werden.

In einer Weiterbildung ist die Vorrichtung mit der Steuereinheit dazu ausgebildet, dass das Steuersignal über eine anschließbare Schalteinheit zu ändern ist und die Energieverteilungseinrichtung dazu ausgebildet ist, mit dem geänderten Steuersignal den zweiten Anteil derart zu reduzieren, dass ein Energiefluss in das dritte Stromnetz vernachlässigbar ist. Mit einer Reduzierung des zweiten Anteils, welcher möglicherweise durch die Reduzierung auch gegen Null gehen kann, entspricht näherungsweise der erste Energiefluss aus dem ersten Stromnetz dem ersten Anteil, welcher nun zum Verbrauch für an das zweite Stromnetz angeschlossene Verbraucher zur Verfügung steht und damit eine Unabhängigkeit von dem Energiefluss aus dem dritten Stromnetz bereitstellt.

Eine wirtschaftliche Nutzung wird weiter dadurch optimiert, dass die Steuereinheit ein Mittel zum Erfassen eines Energieverbrauches im zweiten Stromnetz aufweist. Dieses Mittel erkennt den Bedarf an elektrischer Energie im zweiten Stromnetz und kann die Steuereinheit in einen Zustand schalten, in dem die Menge der benötigten Energie dem zweiten Stromnetz automatisch zuteilt. D.h. der erste Anteil wird bedarfsgerecht ermittelt, die nicht benötigte Energie, also der zweite Anteil, könnte in das dritte Stromnetz gespeist werden.

In einer Weiterbildung der Erfindung weist die Steuereinheit ein Vorgabemittel auf, über welche das Steuersignal dahingehend änderbar ist, dass der erste Anteil und der zweite Anteil in einem vorgebbaren Verhältnis aufteilbar sind. Dieses Vorgabemittel könnte vorteilhaft eingesetzt werden, wenn mit, beispielsweise einem Energieversorgungsunternehmen, ein entsprechender Energieabnahme-/Energielieferungsvertrag abgeschlossen wurde. Mit dem Vorgabemittel können sodann feste anteilige Werte eingestellt werden.

Weiterhin ist es zweckmäßig, dass die Steuereinheit einen Fernwirkeingang aufweist, über welchen diese Steuerbefehle entgegennimmt. Da die Energieversorgungsunternehmen bereits mit über das Energieversorgungsnetz verteilbare Fernwirksignalen arbeiten, ist die Vorrichtung mit Vorteil dazu ausgebildet, Steuersignale entgegenzunehmen. Diese Steuerbefehle müssen nicht zwangsläufig aus dem dritten Stromnetz, also beispielsweise einem öffentlichen Stromnetz, kommen, sondern es wäre ebenso denkbar, dass die Steuerbefehle aus dem ersten oder dem zweiten Stromnetz der Steuereinheit über den Fernwirkeingang bereitgestellt werden.

Vorteilhafterweise handelt es sich bei dem ersten Stromnetz um ein Netzwerk von Stromleitungen einer Photovoltaik- oder einer Windkraft-Anlage, dass Stromnetz ist dabei ein lokales Verbrauchs-Netzwerk und das dritte Stromnetzwerk ein öffentliches Stromnetz.

Verfahrensgemäß wird die eingangs genannte Aufgabe dadurch gelöst, dass zum Betrieb einer Energieverteilungseinrichtung mit einem ersten Anschluss zum Anschluss an ein erstes Stromnetz, einem zweiten Anschluss zum Anschluss an ein zweites Stromnetz und einem dritten Anschluss zum Anschluss an ein drittes Stromnetz, wobei über den ersten Anschluss ein erster Energiefluss eingespeist wird, über den zweiten Anschluss ein zweiter Energiefluss ausgegeben wird, wobei der erste Energiefluss in einen ersten Anteil und einen zweiten Anteil aufgeteilt, der erste Anteil in das zweite Stromnetz und der zweite Anteil in das dritte Stromnetz eingespeist wird. Mittels alternativer Energiequellen erzeugte Energie kann somit mit Vorteil sowohl in ein zweites Stromnetz als auch in ein drittes Stromnetz eingespeist werden.

Vorteilhafterweise wird über eine Steuereinheit der zweite Anteil derart reduziert, dass sein Energiefluss in das dritte Stromnetz vernachlässigbar ist.

Um ein wirtschaftliches Optimum zu erreichen, wird ein Energieverbrauch im zweiten Stromnetz erfasst und der erste Anteil dem Energieverbrauch angepasst. Es wird also ein Bedarf an elektrischer Energie in dem zweiten Stromnetz erkannt und mittels der Steuereinheit in Zusammenarbeit mit der Energieverteilungseinrichtung wird die Menge der benötigten Energie in dem zweiten Stromnetz optimal zugeteilt.

Weiterhin ist es verfahrensgemäß von Vorteil, wenn die Aufteilung in den ersten Anteil und den zweiten Anteil über Steuerbefehle aus einem der Stromnetze durchgeführt wird. Mittels der Steuerbefehle aus den Stromnetzen können Regelkreise aufgestellt werden, welche sich optimal an die z. Z. vorherrschenden Verhältnisse in den einzelnen Stromnetzen anpassen und somit für eine wirtschaftliche Nutzung optimale Bedingungen bereitgestellt werden.

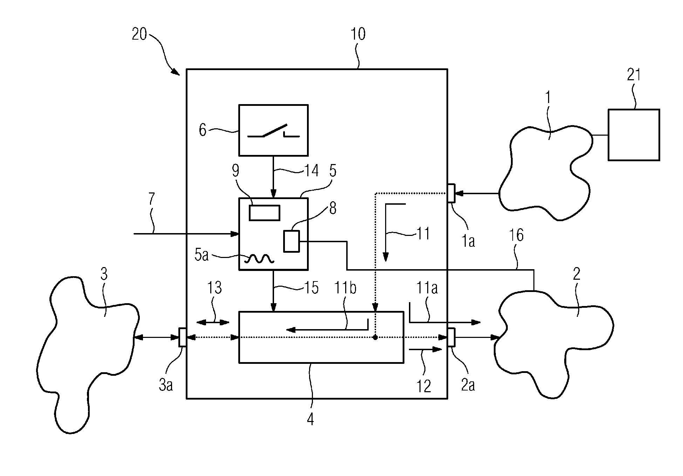

Weitere Merkmale und Vorteile sind dem Ausgestaltungsbeispiel aus der Zeichnung zu entnehmen. Es zeigt die Figur eine Vorrichtung zur Steuerung der Energieverteilung am Beispiel einer Photovoltaikanlage.

Gemäß der Figur ist eine Vorrichtung 20 zur Energieverteilung dargestellt. In einem Schaltschrank 10 sind die für die Energieverteilung notwendigen Komponenten angeordnet. Eine Energieverteilungseinrichtung 4 verfügt dabei über einen ersten Anschluss 1a zum Anschluss an ein erstes Stromnetz 1, einen zweiten Anschluss 2a zum Anschluss an ein zweites Stromnetz 2 und einen dritten Anschluss 3a zum Anschluss an ein drittes Stromnetz 3. Das erste Stromnetz 1 ist ein Netzwerk von Stromleitungen, welches zu einer Photovoltaikanlage mit einem Solarzellenpanel 21 gehört. Über dieses Solarzellenpanel 21 wird durch die Sonnenenergie Strom erzeugt. Der erzeugte Strom wird über fachübliche Maßnahmen, wie z.B. einen Wechselrichter, für die Energieverteilungseinrichtung 4 aufbereitet. Dieser Wechselrichter kann auch vorteilhaft in die Vorrichtung 20 integriert werden, wobei eine platzsparende bauliche Einheit entsteht. Die, über den ersten Anschluss 1a, dem ersten Stromnetz 1 entnehmbare Energie stellt einen ersten Energiefluss 11 dar, welcher in Richtung der Energieverteilungseinrichtung 4 gerichtet ist. In der Figur ist zur besseren Erkennbarkeit ein prinzipieller Energiefluss mit gepunkteten Linien und entsprechenden Richtungspfeilen dargestellt.

Es führt also grundsätzlich ein erster Energiefluss 11 in die Energieverteilungseinrichtung 4 hinein und ein zweiter Energiefluss 12 aus der Energieverteilungseinrichtung 4 heraus, ein dritter Energiefluss 13 kann vorteilhafter Weise zwei Richtungen annehmen, nämlich eine Richtung in die Energieverteilungseinrichtung 4 hinein und eine andere Richtung aus der Energieverteilungseinrichtung 4 heraus in das dritte Stromnetz 3. Diese Verteilung der Energieflüsse durch die Energieverteilungseinrichtung 4 wird mittels einer Steuereinheit 5 gesteuert. Die Steuereinheit 5 ist dazu über eine zweite Steuerleitung 15 mit der Energieverteilungseinrichtung 4 verbunden und kann dieser entsprechende Steuerbefehle angeben.

Für eine feste Vorgabe der Verhältnisse des ersten Anteils 11a und des zweiten Anteils 11b weist die Steuereinheit 5 ein Vorgabemittel 9 auf. In diesem Vorgabemittel 9 können beispielsweise mittels Einstellschaltern definierte Werte für die Größe des ersten und des zweiten Anteils 11a,11b vorgegeben werden. Die Steuereinheit 5 setzt sodann ein entsprechendes Steuersignal 5a an die Energieverteilungseinrichtung 4 ab, wobei diese den ersten Energiefluss 11 den Vorgaben entsprechend in die mengenmäßig geforderte Aufteilung von einen ersten Anteil 11a und einen zweiten Anteil 11b durchführt. Dabei wird der erste Anteil 11a zur Unterstützung in das zweite Stromnetz 2 und der zweite Anteil 11b wird in das dritte Stromnetz 3 gespeist. Mit der Rückspeisung des zweiten Anteils 11b in das dritte Stromnetz 3 kann beispielsweise einem öffentlichen Stromnetz zusätzliche Energie bereitgestellt werden und diese bereitgestellte Energie kann einem Betreiber der Vorrichtung 20 vergütet werden.

Über eine Schalteinheit 6, welche mit einer ersten Steuerleitung 14 mit der Steuereinheit 5 gekoppelt ist, lässt sich das Steuersignal 5a derart ändern, dass der zweite Anteil 11b gegen Null geht und sein Energiefluss in das dritte Stromnetz 3 vernachlässigbar ist. Diese Umschaltung entspricht einer Handumschaltung, wenn beispielsweise die über die Photovoltaikanlage mit ihrem Solarzellenpanel 21 erzeugte Energie komplett in das zweite Stromnetz 2 eingespeist werden soll.

Mit Hilfe eines Mittels 8 zum Erfassen eines Energieverbrauches kann die Vorrichtung 20 automatisiert werden, denn das Mittel 8 ist dazu ausgestaltet, über eine Erfassungsleitung 16 einen Energieverbrauch des zweiten Stromnetzes 2 zyklisch zu ermitteln und als Ergebnis mittels der Steuereinheit 5 ein angepasstes Steuersignal 5a der Energieverteilungseinrichtung 4 bereitstellt. Bedarfsgerecht kann somit dem zweiten Stromnetz 2 immer die jeweilige Energie bereitgestellt werden, welche momentan gefordert ist. Die nicht benötigte Energie, welche dem zweiten Anteil 11b entspricht, kann in das dritte Stromnetz über den dritten Anschluss 3a zurückgespeist werden.

Ein weiterer für die Erfindung wesentlicher Gedanke ist folgender. In vielen Ländern speisen heutzutage private Photovoltaik-Anlagen ausschließlich in das öffentliche Stromnetz Energie ein, da die eingespeiste Energie durch staatliche Gesetzgebung, wie z.B. dem Energie-Einspeisegesetz, höher vergütet wird, als der von einem Energieversorger berechnete Preis für elektrische Energie beträgt. Diese subventionierte Vergütung hat eine beschränkte Laufzeit. D.h. während dieser Laufzeit ist es für einen privaten Energieerzeuger wirtschaftlich sinnvoller Energie in das öffentliche Stromnetz einzuspeisen. Ein Eigenverbrauch der erzeugten Energie blieb bisher unberücksichtigt, aber mit Ablauf der begrenzten Laufzeit kehren sich die Verhältnisse um, so dass für den Betreiber einer Photovoltaik-Anlage der Eigenverbrauch der selbsterzeugten elektrischen Energie die für ihn wirtschaftlichere Lösung darstellt.

In einem weiteren Ausführungsbeispiel ist die Vorrichtung für den Betrieb einer Rundsteueranlage ausgestaltet, die Verbraucher sind dabei ebenfalls für die Rundsteueranlage vorbereitet.

Die Rundsteueranlage dient zur Fernsteuerung von Verbrauchern im Energieversorgungsnetz des EVU. Als Übertragungsweg wird das normale Energieversorgungsnetz verwendet. Die Übertragung der Steuerbefehle erfolgt durch Impulsfolgen im Bereich von 167 bis ca. 2000 Hz, die der 50-Hz-Spannung mit einer Amplitude von ca. 1...8% der jeweiligen Netznennspannung überlagert sind. Die Tonfrequenz wird zur Übertragung nach einem Code (Impulsraster) ein- und ausgeschaltet, wodurch ein "Telegramm" entsteht. Den fernzusteuernden Verbraucher ist ein spezieller Empfänger (Rundsteuerempfänger) vorgeschaltet, der die Impulstelegramme wieder aus dem Netz ausfiltert und daraus die gewünschte Steuerinformation ableitet.

Der Energieverteiler ist beispielsweise als ein verstellbarer Transformator mit drei Hauptwicklungen ausgestaltet. Ein Übersetzungsverhältnis des Transformators könnte mechanisch über eine Servosteuerung an die zu verteilenden Energieflüsse angepasst werden.

Auch ist ein Energieverteiler möglich, welcher aus steuerbaren Leistungshalbleitern wie IGBT's aufgebaut ist.

Eine Kombination aus steuerbaren Leistungshalbleitern mit einem Transformator mit einer Mehrzahl von Wicklungsabgriffen, wobei die Anschaltung an die unterschiedlichen Abgriffe über Halbleiterschalter geschaltet werden ist auch denkbar.

## Patentansprüche

1. Vorrichtung (20) zur Energieverteilung, umfassend
- eine Energieverteilungsseinrichtung (4), welche
• einen ersten Anschluss (1a) zum Anschluss an ein erstes Stromnetz (1),
• einen zweiten Anschluss (2a) zum Anschluss an ein zweites Stromnetz (2) und
• einen dritten Anschluss (3a) zum Anschluss an ein drittes Stromnetz (3) aufweist,
- eine Steuereinheit (5), welche mit der Energieverteilungsseinrichtung (4) zum Steuern der Energieverteilung in Verbindung steht,
wobei die Energieverteilungsseinrichtung (4) dazu ausgebildet ist anhand eines Steuersignals (5a) von der Steuereinheit (5) einen ersten Energiefluss (11) aus dem ersten Stromnetz (1) in einen ersten Anteil (11a) und einen zweiten Anteil (11b) aufzuteilen und den ersten Anteil (11a) in das zweite Stromnetz (2) und den zweiten Anteil (11b) in das dritte Stromnetz (3) umzuleiten.

2. Vorrichtung (20) nach Anspruch 1, wobei die Steuereinheit (5) dazu ausgebildet ist das Steuersignal (5a) über eine anschließbare Schalteinheit (6) zu ändern und die Energieverteilungseinrichtung (4) dazu ausgebildet ist mit dem geänderten Steuersignal (5a) den zweiten Anteil (11b) derart zu reduzieren, dass sein Energiefluss in das dritte Stromnetz (3) vernachlässigbar ist.

3. Vorrichtung (20) nach Anspruch 1 oder Anspruch 2, wobei die Steuereinheit (5) ein Mittel (8) zum Erfassen eines Energieverbrauches im zweiten Stromnetz (2) aufweist.

4. Vorrichtung (20) nach einem der Ansprüche 1 bis 3, wobei die Steuereinheit (5) ein Vorgabemittel (9) aufweist, über welches das Steuersignal (5a) dahingehend änderbar ist, dass der erste Anteil (11a) und der zweiten Anteil (11b) in einem vorgebbaren Verhältnis aufteilbar sind.

5. Vorrichtung (20) nach einem der Ansprüche 1 bis 4, wobei die Steuereinheit (5) einen Fernwirkeingang (7) aufweist, über welchen diese Steuerbefehle entgegen nimmt.

6. Vorrichtung (20) nach einem der Ansprüche 1 bis 5, wobei das erste Stromnetz (1) ein Netzwerk von Stromleitungen einer Photovoltaik- oder einer Windkraft-Anlage, das zweite Stromnetz (2) ein lokales Verbrauchs-Netzwerk und das dritte Stromnetzwerk (3) ein öffentliches Stromnetz ist.

7. Verfahren zum Betrieb einer Energieverteilungsseinrichtung (4) mit
- einem ersten Anschluss (1a) zum Anschluss an ein erstes Stromnetz (1),
- einem zweiten Anschluss (2a) zum Anschluss an ein zweites Stromnetz (2) und
- einem dritten Anschluss (3a) zum Anschluss an ein drittes Stromnetz (3),
wobei
- über den ersten Anschluss (1a) ein erster Energiefluss (11) eingespeist wird,
- über den zweiten Anschluss (2a) ein zweiter Energiefluss (12) ausgegeben wird,
wobei der erste Energiefluss (11) in einen ersten Anteil (11a) und einen zweiten Anteil (11b) aufgeteilt, der erste Anteil (11a) in das zweite Stromnetz (2) und der zweite Anteil (11b) in das dritte Stromnetz (3) eingespeist wird.

8. Verfahren nach Anspruch 7, wobei über eine Steuereinheit (5) der zweite Anteil (11b) derart reduziert wird, dass sein Energiefluss in das dritte Stromnetz (3) vernachlässigbar ist.

9. Verfahren nach Anspruch 7 oder 8, wobei ein Energieverbrauch im zweiten Stromnetz (2) erfasst wird und der erste Anteil (11a) dem Energieverbrauch angepasst wird.

10. Verfahren nach einem der Ansprüche 7 bis 8, wobei die Aufteilung in den ersten Anteil (11a) und den zweiten Anteil (11b) über Steuerbefehle aus einem der Stromnetze (1, 2, 3) durchgeführt wird.
